# EUROPÄISCHE PATENTANMELDUNG

(11) **EP 0 802 646 A2**
(43) Veröffentlichungstag der Anmeldung: **22.10.1997**
(21) Anmeldenummer: 97102751.1
(22) Anmeldetag: 20.02.1997
(51) Int. Cl.: H04L 1/00, H04L 7/04

(54) **Fehlerrobustes Multiplexverfahren mit HEADER-Kontrollfeld**

(30) Priorität: 15.04.1996 DE 19614739
(71) Anmelder: ROBERT BOSCH GMBH, 70442 Stuttgart (DE)
(72) Erfinder: Vogel, Peter, 31139 Hildesheim (DE); Wolf, Joachim, 31141 Hildesheim (DE); Lappe, Dirk, 31137 Schellerten/Dinklar (DE); Nitsche, Gunnar, Dr., 31139 Hildesheim (DE)

(57) **Zusammenfassung**

Es wird ein Verfahren zur Übertragung von Daten vorgeschlagen, bei dem ein Kontollfeld HEX eine Rekonstruktion von fehlerhaften HEADER-Daten erlaubt.

## Beschreibung

### Stand der Technik

Die Erfindung geht von einem Verfahren zur Übertragung von Datenpaketen nach der Gattung des Hauptanspruchs aus.

Es ist schon ein Verfahren zur Übertragung von Datenpaketen bekannt, das Protokoll H.22P (ITU-T Study Group 15, LBC 95-276 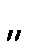 ITU-T Recommendation H.22P")
In diesem Protokoll werden die Rahmenstrukturen, die Formate der Daten- und Steuerfelder und eine Struktur für die vom Multiplexer zu übertragenden Daten, das Multiplexprotokoll, festgelegt. Das Multiplexprotokoll ermöglicht die Verarbeitung von logischen Informationen, die über die Adaptationebene auf die Multiplexebene gelangen, in einheitliche Dateneinheiten. Das Protokoll ermöglicht die Übertragung von beliebigen Kombinationen von digitalen Audio und Videodaten oder anderen Informationen über eine Datenleitung und schlägt zur Verhinderung eines Datenverlustes ein spezielles Protokoll vor, das ein Synchronisationsmuster mit 31 Bits Länge aufweist. Ihm wird der HEADER (31 oder 63 Bits) und das Informationsfeld mit fester Länge nachgestellt. Das Synchronisationsmuster muß durch eine Korrelationsbedingung im Empfänger erkannt werden, erst dann kann die Verarbeitung der Multiplex-Pakete im Empfänger beginnen.
Bei diesem Verfahren können Datenverluste durch einen Verlust der Synchronisation auftreten. Fehlerhafte HEADER können nicht rekonstruiert werden.

### Vorteile der Erfindung

Das erfindungsgemäße Verfahren mit den kennzeichnenden Merkmalen des Anspruch 1 hat demgegenüber den Vorteil, daß im Falle einer fehlerhaften Übertragung des HEADERs durch das Kontrollfeld HEX einen Möglichkeit zur Rekonstruktion von Daten besteht.

Durch die in den Unteransprüchen aufgeführten Maßnahmen ist eine vorteilhafte Weiterbildung und Verbesserung des im Hauptanspruch gegebenen Verfahren möglich.

Besonders vorteilhaft ist, daß das Feld HEX eine beliebige Anzahl Bits haben kann, die die Informationen über mögliche Wechsel des HEADER beinhalten.

Diese Informationen können eine einfache Rücksetzung des Zählers in HEX auf Null sein.

Setzt man Klassen von Datenblöcken mit identischem HEADER und festen Längen ein, wird der Zähler konstant gehalten und die Rücksetzung auf Null ist das Zeichen für den HEADER-Wechsel.

Eine weitere vorteilhafte Ausführungsform verlangt als Zeichen eines Klassenwechsels eine In- oder Dekrementierung des HEX-Zählers.

Alternativ dazu kann es von Vorteil sein den Zähler innerhalb einer Klasse zu inkrementieren und einen HEADER-Wechsel durch Rücksetzung auf Null anzuzeigen.

In manchen Fällen ist es vorteilhaft, wenn ein HEADER-Wechsel mit dem Dekrementieren des Zählers vom maximalen Wert auf Null eingeleitet wird.

Eine weitere Art des HEADER-Wechsels wird durch eine Rückmeldung des Empfängers gewählt.

Eine dafür vorteilhafte Rücksetzung des Änderungssignals nach wartet die Rückmeldung des Empfängers ab.

Nach kann dazu aber bei bekannten Signallaufzeiten eine Mindestdauer vor der Rücksetzung abgewartet werden.

Für eine Reduktion von Fehlern kann der HEADER über die Klasse der Pakete verteilt angeordnet werden

Weiterhin ist es vorteilhaft, daß HEADER und HEX gemeinsam geschützt werden

Ein vorteilhaftes Fehlerschutzverfahren verwendet Reed-Solomon-Codes.

### Zeichnung

Ein Ausführungsbeispiel des Erfindung ist in der Zeichnung dargestellt und wird in nachfolgender Beschreibung näher erläutert.
Es zeigen:
- Fig. 1:: Struktur der Datenebenen für die Multiplexdatenübertragung
- Fig. 2:: Aufbau der Dateneinheit des Multiplexprotokolls

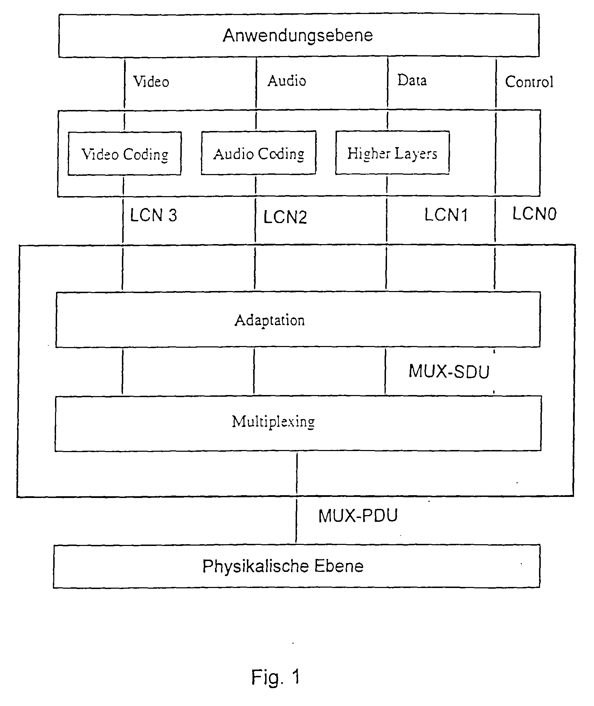

Die Datenübertragung von beliebigen Datensignalen findet nach Fig. 1 über hierarchisch gegliederte Ebenen statt.
Von den einzelnen Datengeräten kommen die zum Teil analogen Signale über die Anwendungsebene zur Kodierungsebene. Nach einem Digitalisierungsschritt werden die Inhalte der logischen Kanäle LCN an die Adaptationebene des Multiplexers weitergegeben. Immer noch in getrennten Kanälen werden die Daten als MUX-SDUs (Service Data Units) an die Multiplexebene weitergereicht. Diese Ebene verarbeitet die Vielzahl an Kanälen zu einem Kanal und gibt MUX-PDUs (Protocol Data Units) aus. Diese Datenpakete werden nach dem erfindungsgemäßen Protokoll mit Signalen gefüllt.

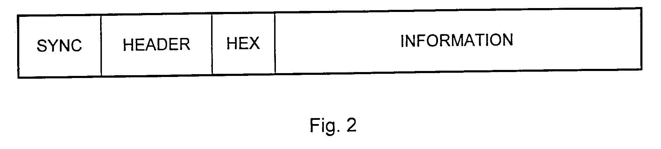

Fig. 2 zeigt ein solches MUX-PDU in der Abfolge der Steuer- und Datenfelder. Das erste Feld SYNC beinhaltet ein Synchronisationsmuster variabler Länge, das eine klar zu detektierende Bitfolge von, z.B. 31 Bit beinhaltet. Das Synchronisationsmuster wird jedem Multiplexpaket vorangestellt. Als Muster können z. B. Barker- oder Williardsequenzen eingesetzt werden.
Im Feld HEADER legt man das Übertragungsschema für den nachfolgenden Informationsblock fest. Ein Beispiel für ein solches Übertragungsschema wird im Protokoll H.223 (ITU-T Study Group 15) beschrieben. Ein solcher HEADER weist z.B. 4 Bits auf. Alle 16 Zustände, die der HEADER mit den 4 Bits beschreiben kann, sind in einer Tabelle abgelegt. Möchte man z.B. nur Audiosignale übertragen, wird ein bestimmte Bitfolge gesetzt, wird der Informationsblock für Audio- und Videosignale geteilt wird eine andere Bitfolge gesendet.

Anschließend folgt ein Block HEX, der die Daten zur Rekonstruktion fehlerhafter HEADER enthält.
Im Anschluß folgt das Informationsfeld. Es ist nach den im HEADER festgelegten Regeln für die verschiedenen Datenquellen strukturiert. Das Informationsfeld wird so lange mit Daten gemäß des vom HEADER vorgegebenen Multiplexschema aufgefüllt, bis die Paketlänge n erreicht ist.

Als erster Schritt für eine Datenübertragung muß mit Hilfe eines Kontrollprotokolls eine Verbindung aufgebaut werden, wobei Datenpakete mit einer definierten Länge n benutzt werden. Die Länge n ist für Empfänger und Sender einstellbar, auch zu einem späteren Zeitpunkt. Dazu muß das Kontrollprotokoll in die Übertragung eingreifen und einen Abgleich vornehmen.

Da die Rahmenlänge n der Multiplex-Pakete über einen im Kontrollprotokoll festgelegten Zeitraum konstant gehalten werden kann, läßt sich folgende Synchronisationsstrategie anwenden:
Zu Beginn der Übertragung sucht der Empfänger das Synchronisationsmuster. Das Synchronisationsmuster muß nur an den entsprechenden Stellen nach der Länge n gesucht und überprüft werden. Es ist beim Verbindungsaufbau und bei der Startsynchronisation z. B. von Vorteil, zu Beginn der Übertragung (Verbindungsaufbau mit Hilfe eines Kontrollprotokolls) kürzere Längen für n zu benutzen. Mit Hilfe des Kontrollprotokolls wird dann ein Zeitpunkt festgelegt, ab dem die Länge n geändert wird.

Zur Erkennung des SYNC auf der Empfängerseite der Datenübertragung im Demultiplexer wird eine Mindestanzahl von Bits festgelegt, die zwischen einem Muster im Datenstrom und dem Synchronisationsmuster SYNC übereinstimmen müssen. Ist dieses Korrelationsminimum erreicht (Korrelationsbedingung), so gilt das Synchronisationsmuster als gefunden. Falls auf diese Weise ein Synchronisationsmuster gefunden wurde, läuft ein Fehlererkennungsverfahren für den HEADER ab. Eine erfolgreicher Aufbau der Synchronisation im Empfänger findet nur statt, wenn zum Synchronistaionsmuster ein fehlerfreier HEADER gefunden wurde. Die Fehlererkennung kann im einfachsten Fall ein Parity-Check sein, wird aber vorzugsweise mit einem CRC-Code durchgeführt. Wurde ein Fehler bei der Übertragung der Daten entdeckt, wird das Synchronisationsverfahren mit der Suche nach dem nächsten Synchronisationsmuster fortgesetzt. In diesem Beispiel muß das SYNC und der dazugehörige fehlerfreie HEADER einmal gefunden werden, um die Startsynchronisation zuwege zu bringen.

Ist das Startsynchronisationsverfahren erfolgreich durchgeführt, wird das nächste Synchronisationsmuster jeweils nach einem kompletten Rahmen der Länge n gesucht. Gleichzeitig läuft ein Zähler mit, der inkrementiert wird, wenn das Synchronisationsmuster die Korrelationsbedingung nicht erfüllt und der HEADER nicht fehlerfrei erkannt werden kann. Hat der Zähler einen Grenzwert G2 (ganzzahliger Wert, der vom Kontrollprotokoll festgelegt wird) überschritten, gilt die Synchronisation als verloren und es muß nach obigem Schema neu synchronisiert werden. Typischerweise gilt die Synchronisation nach vier Versuchen als verloren (abhängig vom untersuchten Kanal) und es erfolgt eine neue Startsynchronisation. .

Ist die Synchronisation im Empfänger erfolgreich abgelaufen, beginnt die Verarbeitung des HEADERS, von HEX und der INFORMATION.

Das Feld HEX umfaßt z Bits, die als Zähler eingesetzt werden (0 bis 2^{z-1}). Zunächst wird der Zähler im Sender auf 0 gesetzt. Wird ein Multiplexpaket mit dem gleichen HEADER wie das vorhergehende Paket übertragen, so wird der Zähler HEX inkrementiert. Sollte der Zähler bereits den Wert 2^{z-1} erreicht haben, so wird der Zählerstand beibehalten. Ändert sich der HEADER, so wird der Zähler HEX des zugehörigen Paketes auf 0 gesetzt. Wird ein HEADER als fehlerhaft erkannt, so kann das zugehörige Multiplexpaket zunächst nicht weiter verarbeitet werden. Mit Hilfe des Zählers ist allerdings eine spätere korrekte Verarbeitung möglich. Sollte nämlich in einem der nächsten Pakete ein gültiger HEADER mit zugehörigem HEX-Datenblock vorhanden sein, so kann man anhand des Zählers HEX Rückschlüsse auf die vorhergehenden HEADER anstellen ( 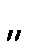 Rückwärtserkennung").
Der Sachverhalt soll an einem Beispiel verdeutlicht werden. Es werden drei empfangene Multiplexpakete betrachtet. Paket 2 sei mit fehlerhaftem HEADER empfangen worden und wird deshalb zunächst zwischengespeichert. Ist nun der Zähler HEX 3 im Paket 3 größer oder gleich 1, so kann das vorhergehende gespeicherte Paket 2 mit HEADER 3 verarbeitet werden. Ist der Zähler HEX 3 dagegen 0, so kann HEADER 3 nicht identisch mit dem fehlerhaften HEADER 2 sein. Daher ist es günstiger, das gespeicherte Paket 2 mit HEADER 1 zu verarbeiten.
Es besteht zwar eine Unsicherheit, ob der richtige HEADER benutzt wird, aber im allgemeinen ist es vorteilhafter, die Daten mit einem falschen HEADER zu verarbeiten, als das Multiplexpaket überhaupt nicht zu verarbeiten.

### Weitere Ausführungsbeispiele

Eine weiterer Einsatz des Feldes HEX setzt voraus, daß man im Sender z.B. mit Hilfe eines Kontrollprotokolls festlegt, daß eine Mindestanzahl von m aufeinanderfolgenden Multiplexpaketen mit dem gleichen Multiplexschema übertragen werden soll, bevor sich der HEADER ändert So kann das Verfahren noch fehlerrobuster gemacht werden. Je m Pakete würden dann eine gemeinsame Klasse (mit identischem HEADER) darstellen. Im Beispiel der drei Datenpakete wäre bei HEX 3 = 0 und m > 1 klar, daß HEADER 2 identisch mit HEADER 1 sein muß. In Fall einer gemeinsamen HEADER-Klasse könnte man die Zählweise von HEX auch in folgender Weise modifizieren:
a)Der Zählerstand HEX für die HEADER einer gemeinsamen Klasse ist identisch. Erst bei Beginn einer neuen Klasse wird der Zählerstand gemäß obigen Regeln imkrementiert bzw. auf 0 gesetzt.
b)In jeder Klasse wird HEX im ersten Paket auf 0 gesetzt und anschließend für jedes weitere Paket der Klasse inkrementiert.

Durch das Zwischenspeichern eines Paketes mit fehlerhaftem HEADER wird die Weitergabe an die Decoder der Datenquellen verzögert. Für bestimmte Datenquellen möchte man solche Verzögerungen vermeiden. Daher sollten diese Datenquellen in seperaten Multiplexfeldern übertragen werden, die nicht durch den HEADER spezifiziert werden.

Als weitere Möglichkeit des Einsatzes von HEX läßt sich das Feld auch zur 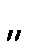 Vorwärtssignalisierung" verwenden. Im Sender wird festgelegt, wie oft der aktuelle HEADER in den weiteren Paketen benutzt wird. Diese Zahl kann aus den aktuellen Buffer-Ständen der Datenquellen, statistischen Überlegungen oder aufgrund anderer Strategien ermittelt werden. Nach Kenntnis eines gültigen HEADERs mit zugehörigem Zähler HEX können im Empfänger nachfolgende fehlerhafte Pakete korrigiert werden, falls sie im Wertebereich von HEX liegen. Im Empfänger kann der richtige HEADER für ein fehlerhaftes Paket unmittelbar bestimmt werden.
Es entsteht keine Verzögerung. Je weiter der HEADER im voraus bestimmt werden kann, desto besser arbeitet das Verfahren.

Folgende Zählweise sei beispielhaft angegeben: Zunächst wird bestimmt, wie oft der aktuelle HEADER in den nachfolgenden Multiplexpaketen ununterbrochen benutzt wird. Dieser Wert m kann z.B. aus den Buffer-Ständen der Datenquelle ermittelt werden. (Alternativ ist eine willkürlich festzulegende Zahl denkbar).m wird dem Zähler HEX zugewiesen. Geht m über den Wertbereich des Zählers hinaus, so wird der Zähler auf sein Maximum 2^{z}-1 gesetzt. Eine Änderung des HEADERs ist frühestens nach 2^{z} Paketen möglich. Solange der HEADER nicht geändert werden soll, bleibt der Zähler konstant auf m bzw. 2^{z}-1. Soll eine HEADER-Änderung vorgenommen werden, wird in jedem Paket der Zähler um 1 verringert bis der Zähler auf 0 steht. Im folgenden Paket darf der HEADER geändert werden. Der Zähler wird nun erneut auf m bzw. 2^{z}-1 gesetzt, wobei m eventuell neu bestimmt wird.

Gegebenenfalls ist es sinnvoll und auch möglich, die beiden HEX-Zählverfahren , die Rückwärtserkennung und die Vorwärtssignalisierung miteinander zu kombinieren.
Die Verwendung des Zählers HEX ist sowohl mit variablen als auch mit konstanten Multiplexlängen möglich.

In einem weiteren Ausführungsbeispiel wird ein durch die Koordination zwischen Sender und Empfänger ein besonders sicherer Kenntnisstand über den in jedem Paket benutzten HEADER ermöglicht.

HEX besteht aus zwei Bits (B1 und B2). B1 wird für die Anmeldung einer HEADER-Änderung gesetzt, während B2 für die Signalisierung 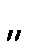 Anmeldung des HEADER-Änderungswunsches auf Empfängerseite erkannt" gesetzt wird. Im folgenden soll ein mögliches Szenario für die Benutzung von B1 und B2 beschrieben werden:

Zu Beginn werden beide Bits auf 0 gesetzt. Es wird zunächst davon ausgegangen, daß sich der HEADER nicht ändert. Möchte der Sender einen neuen HEADER einstellen, so wird B1 auf 1 gesetzt.
Der Empfänger erkennt bei fehlerfreier Übertragung den Änderungswunsch und setzt seinerseits B2 auf 1. Sobald der Sender diese Signalisierung erhält, kann der HEADER geändert werden. Sollte durch Übertragungsfehler die Rückmeldung nicht erfolgen, so muß der Sender den Änderungswunsch nach einer gewissen Wartezeit erneut mit B1 anmelden. Der Sender ändert den HEADER nicht bevor er B2 = 1 erkannt hat. Der Empfänger setzt jeweils dann B2 auf 1, wenn er unmittelbar vorher B1 = 1 empfangen hat. Andernfalls wird B2 auf 0 gesetzt. Für das Rücksetzen von B1 auf 0, sind verschiedene Möglichkeiten denkbar:
B1 wird nach der HEADER-Änderungssignalisierung wieder auf 0 gesetzt. Ein erneutes Setzen von B1 auf 1 darf erst erfolgen, wenn die Rückmeldung B2 = 1 eingetroffen ist, oder eine Mindestzeit seit der HEADER-Änderungssignalisierung abgelaufen ist.
B1 wird solange auf 1 gesetzt, bis die Rückmeldung B2 =1 eingetroffen ist.

Für beide Verfahren ist es günstig die Laufzeit zu kennen, die benötigt wird, um einen Multiplexpaket zum Empfänger und zurück zu schicken. Mit dieser Kenntnis kann im Empfänger das Datenpaket bestimmt werden, ab dem die HEADER-Änderung durchgeführt wurde, falls die Rückmeldung B2 fehlerfrei vom Sender empfangen wurde.

Für alle Ausführungsformen ist es möglich Fehlerschutzverfahren anzuwenden. So kann HEX mit Hilfe eines fehlererkennenden und anschließend fehlerkorrigierenden Codes geschützt werden. Es ist natürlich auch möglich, HEADER und HEX als einen Datenblock anzusehen, der einen gemeinsamen Fehlerschutz enthält

Möchte man sich ein paketübergreifende Verteilung des HEADERs (Interleaving) zunutze machen, wird vorausgesetzt, daß der HEADER nur nach jeweils m Paketen geändert werden darf (m aufeinanderfolgende Pakete mit identischem HEADER entsprechen einer 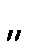 Klasse"). Mit der Festlegung einer Zahl von Multiplexpaketen mit konstantem HEADER, ist es möglich, den HEADER über die gesamte Klasse zu verteilen. Um Verzögerungen beim Empfänger zu vermeiden, ist es sinnvoll, daß der HEADER, der innerhalb einer Klasse übertragen wird, das Multiplexschema der folgenden Klasse enthält.
Zu Beginn der Übertragung der Daten muß als erstes eine Leerklasse ohne INFORMATION übertragen werden, die den HEADER für die folgende Klasse enthält.

Für den Schutz des über die m Pakete verteilten HEADERs bieten sich Lösungen mit verschiedenen fehlerkorrigierenden Maßnahmen, z.B. mit Hilfe von Reed-Solomon-Codes an. Nach der Reed-Solomon Codierung erhält man 2^{k}-1 Symbole, die jeweils aus k Bit bestehen. Die Verteilung des HEADERs samt Fehlerschutz entlang der m Pakete sollte symbolweise erfolgen. Sollten mehr Symbole als Pakete vorhanden sein, ist es günstig, im vorderen Teil der Klasse eine größere Anzahl von Symbolen zu plazieren. Damit ist es im Empfänger u. U. möglich, eine Decodierung des Reed-Solomon Codes vorzunehmen, bevor alle Symbole bekannt sind. Das paketübergreifende Interleaving ermöglicht eine bessere Fehlerkorrigierbarkeit der HEADER, da der Einfluß von Bündelfehlern verringert wird.

Für alle beschriebenen Ausführungsformen gilt, daß alle mit HEADER versehenen Multiplexprotokolle davon profitieren, daß der zu übertragende HEADER mindestens m-mal hintereinander benutzt wird. Im Prinzip bedeutet das Festlegen einer solchen Zahl m nichts anderes, als das Vergrößern der Multiplexpaketlänge, wenn feste Längen benutzt werden, ohne daß dadurch die Nachteile einer Verzögerung in Kauf zu nehmen wären.

Sollte trotz aller Fehlerstrategien keine Möglichkeit bestehen, den zu einem Paket zugehörenden HEADER zu ermitteln, so sollte der letzte fehlerfrei empfangene HEADER benutzt werden.

## Patentansprüche

1. Verfahren zur Datenübertragung mittels Datenblöcken zwischen zwei Stationen, wobei die Datenblöcke ein Synchronisationsmuster SYNC, einen HEADER und einen INFORMATIONS-Feld aufweisen, wobei das Synchronisationsmuster SYNC den Beginn des Datenblockes anzeigt und der HEADER Steuerzeichen für die Behandlung des nachfolgenden INFORMATIONS-Feldes enthält, dadurch gekennzeichnet, daß dem HEADER ein Kontrollfeld HEX für die Rekonstruktion fehlerhaft übertragener HEADER nachgestellt wird.

2. Verfahren zur Datenübertragung mittels Datenblöcken zwischen zwei Stationen nach Anspruch 1, dadurch gekennzeichnet, daß HEX eine Anzahl von z Bits als Information über mögliche HEADER-Wechsel zwischen Datenblöcken enthält.

3. Verfahren zur Datenübertragung mittels Datenblöcken zwischen zwei Stationen nach Anspruch 1 bis 2, dadurch gekennzeichnet, daß ein HEADER-Wechsel frühestens nach m Datenblöcken durchgeführt werden darf.

4. Verfahren zur Datenübertragung mittels Datenblöcken zwischen zwei Stationen nach Anspruch 1 bis 2, dadurch gekennzeichnet, daß ein HEADER-Wechsel jeweils nur nach genau m Paketen durchgeführt werden darf.

5. Verfahren zur Datenübertragung mittels Datenblöcken zwischen zwei Stationen nach Anspruch 1 bis 4, dadurch gekennzeichnet, daß m vom Sender oder von einem Kontrollprotokoll vordefiniert wird.

6. Verfahren zur Datenübertragung mittels Datenblöcken zwischen zwei Stationen nach Anspruch 1 bis 5, dadurch gekennzeichnet, daß der mittels HEX definierte Zähler in einem Paket mit verändertem HEADER auf einen vordefinierten Wert, vorzugsweise Null, gesetzt wird.

7. Verfahren zur Datenübertragung mittels Datenblöcken zwischen zwei Stationen nach Anspruch 1 bis 5, dadurch gekennzeichnet, daß der mittels HEX definierte Zähler inkrementiert wird, falls sich der HEADER im Vergleich zum vorhergehenden Paket nicht verändert hat.

8. Verfahren zur Datenübertragung mittels Datenblöcken zwischen zwei Stationen nach Anspruch 1 bis 5, dadurch gekennzeichnet, daß der mittels HEX definierte Zähler dekrementiert wird, falls sich der HEADER im Vergleich zum vorhergehenden Paket nicht verändert hat.

9. Verfahren zur Datenübertragung mittels Datenblöcken zwischen zwei Stationen nach Anspruch 1 und 2, dadurch gekennzeichnet, daß vorzugsweise vom Kontrollprotokoll eine Zahl m von Datenblöcken mit gleichem HEADER, eine Klasse, festgelegt wird und der mittels HEX definierte Zähler einen konstanten Wert für die Klasse hat und erst bei HEADER-Wechsel auf Null gesetzt wird.

10. Verfahren zur Datenübertragung mittels Datenblöcken zwischen zwei Stationen nach Anspruch 1 und 2, dadurch gekennzeichnet, daß vorzugsweise vom Kontrollprotokoll eine Zahl m von Datenblöcken mit gleichem HEADER, eine Klasse, festgelegt wird und der mittels HEX definierte Zähler innerhalb der Klasse inkrementiert und bei Wechsel der Klasse auf Null gesetzt wird.

11. Verfahren zur Datenübertragung mittels Datenblöcken zwischen zwei Stationen nach Anspruch 1 und 2, dadurch gekennzeichnet, daß eine veränderbare Zahl von zu übertragenden Datenblöcken m mit gleichem HEADER festgelegt wird und der mittels HEX definierte Zähler auf den maximalen Wert m oder 2^{z}-1 gesetzt und ein HEADER-Wechsel mit der Dekrementierung des Zählers auf Null eingeleitet wird.

12. Verfahren zur Datenübertragung mittels Datenblöcken zwischen zwei Stationen nach Anspruch 11, dadurch gekennzeichnet, daß der HEADER-Wechsel im anschließenden Paket erfolgt, wenn ein vordefinierter Wert, vorzugsweise Null, erreicht wird.

13. Verfahren zur Datenübertragung mittels Datenblöcken zwischen zwei Stationen nach Anspruch 11, dadurch gekennzeichnet, daß m über einen bestimmten Zeitraum konstant gehhalten wird und vorzugsweise über ein Kontrollprotokoll verändert werden kann.

14. Verfahren zur Datenübertragung mittels Datenblöcken zwischen zwei Stationen nach Anspruch 4 bis 10, dadurch gekennzeichnet, daß der HEADER über alle Datenblöcke einer Klasse verteilt wird und im HEADER jeweils das Multiplexschema der folgenden Klasse festgelegt wird.

15. Verfahren zur Datenübertragung mittels Datenblöcken zwischen zwei Stationen nach Anspruch 1 und 2, dadurch gekennzeichnet, daß HEX beispielsweise aus 2 Bits besteht, die für die Anmeldung einer HEADER-Änderung und der Rückmeldung mit Erkennung des HEADER-Änderungswunsches gesetzt werden.

16. Verfahren zur Datenübertragung mittels Datenblöcken zwischen zwei Stationen nach Anspruch 15, dadurch gekennzeichnet, daß das HEADER-Änderungssignal bei erfolgreicher Rückmeldung des Empfängers rückgesetzt wird.

17. Verfahren zur Datenübertragung mittels Datenblöcken zwischen zwei Stationen nach Anspruch 15, dadurch gekennzeichnet, daß das HEADER-Änderungssignal nach einer laufzeitabhängigen Mindestdauer rückgesetzt wird.

18. Verfahren zur Datenübertragung mittels Datenblöcken zwischen zwei Stationen nach Anspruch 1 bis 17, dadurch gekennzeichnet, daß HEADER und HEX gemeinsam mit einem fehlererkennenden und fehlerkorrigierenden Kode geschützt werden.

19. Verfahren zur Datenübertragung mittels Datenblöcken zwischen zwei Stationen nach Anspruch 1 bis 18, dadurch gekennzeichnet, daß der Fehlerschutz des HEADERs mit Reed-Solomon-Codes erfolgt.
